(19) Europäisches Patentamt
European Patent Office
Office européen des brevets

(11) EP 2 261 629 A2

(12) EUROPEAN PATENT APPLICATION

(43) Date of publication:
15.12.2010 Bulletin 2010/50

(51) Int Cl.:
G01M 11/02 (2006.01)

(21) Application number: 10163439.2

(22) Date of filing: 20.05.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(30) Priority: 08.06.2009 JP 2009137347

(71) Applicant: Fujinon Corporation
Saitama-shi,
Saitama (JP)

(72) Inventors:
• Ge, Zongtao
Saitama-shi
Saitama (JP)
• Sun, Ping
Saitama-shi
Saitama (JP)

(74) Representative: Klunker . Schmitt-Nilson . Hirsch
Patentanwälte
Destouchesstrasse 68
80796 München (DE)

(54) **Asphere measurement method and apparatus**

(57)     Disclosed is an asphere measurement method capable of measuring the surface deviations and the surface tilts with high accuracy even when an asphere to be measured does not have the wedge-shaped flat portion.

An optical interferometer using a first interferometer (1A) and a second interferometer (1B) acquires shape data of the center portions of a first lens surface (91) and a second lens surface 92 of an aspheric lens (9). From the respective shape data, respective position data of a first umbilical point $P_1$, a first center of curvature, and a first axis of the first lens surface (91) are acquired in a first measurement coordinate system. Simultaneously, respective position data of a second umbilical point $P_2$, a second center of curvature, and a second axis of the second lens surface (92) are acquired in a second measurement coordinate system. On the basis of these position data and the relative position relation between the first measurement coordinate system and the second measurement coordinate system, surface deviations and surface tilts of the aspheric lens (9) are acquired.

**FIG.2**

EP 2 261 629 A2

**Description**

BACKGROUND OF THE INVENTION

1. Field of the Invention

The present invention relates to an asphere measurement method and apparatus for measuring relative deviations (surface deviations and surface tilts) of two detection target surfaces which are both sides of the asphere such as a spherical surface lens used in various optical apparatuses such as digital cameras and optical sensors.

2. Description of the Related Art

In a case where an aspheric lens is formed by molding, the relative position deviation between molding dies may cause surface deviation (relative position deviation between the respective rotation axes of the two lens surfaces constituting the aspheric lens) and tilt (relative inclination deviation between the respective rotation axes of the two lens surfaces constituting the aspheric lens). It is difficult for such surface deviation and tilt to be completely removed from a tool such as a die, yet these are the factors that increase aberration (in particular, rotationally asymmetric aberration such as comatic aberration) in the molded aspheric lens. Therefore, it is desirable that the die should be corrected in the direction of reducing the aberration. For this reason, it is important to detect the occurrence of surface deviation and tilt.

Hitherto, there have been proposed methods of measuring the respective position deviation of the two lens surfaces of an aspheric lens, which is installed to be perpendicular to the optical axis of the lens and has a wedge-shaped flat portion, and the relative tilt between two flat surfaces constituting the flat portion, with respect to the measurement optical axis, by using an autocollimator (refer to Japanese Patent No. 3127003).

SUMMARY OF THE INVENTION

In recent years, demand for aspheric lenses having a large numerical aperture (NA) has increased. In such aspheric lenses with a large NA, occurrence of surface deviation on the order of several micrometers and surface tilt on the order of several tens of seconds, not considered to be a problem before, is now considered to be a problem.

The known method disclosed in Japanese Patent No. 3127003 is applicable to measurement of surface deviation and surface tilt, but it is difficult to perform high accuracy measurement capable of coping with recent demand by using the known method. Further, there is a problem in that it is difficult for the known method to be applied to measurement of an aspheric lens which does not have a wedge-shaped flat portion.

The same problem also arises at the time of measuring surface deviations and surface tilts of a different asphere such as an aspheric mirror having two reflection surfaces formed as aspheric surfaces which are rotationally symmetric.

The invention has been made in view of the above-mentioned situation, and its object is to provide an asphere measurement method and apparatus capable of measuring surface deviations and surface tilts with high accuracy even when the asphere to be measured does not have a wedge-shaped flat portion.

In order to achieve the above-mentioned object, the asphere measurement method and apparatus is configured as follows.

Specifically, according to a first aspect of the invention, provided is the asphere measurement method of measuring surface deviations and surface tilts of an asphere having a first detection target surface and a second detection target surface formed as aspheric surfaces which are rotationally symmetric. The method includes the following steps:

a first interference fringe acquisition step of irradiating first measurement light onto the center portion of the first detection target surface by using a first interferometer and acquiring image data of a first interference fringe pattern which is formed by optical interference between first reference light and returning light of the first measurement light from the first detection target surface;

a second interference fringe acquisition step of irradiating second measurement light onto the center portion of the second detection target surface by using a second interferometer and acquiring image data of a second interference fringe pattern which is formed by optical interference between second reference light and returning light of the second measurement light from the second detection target surface;

a first shape data acquisition step of acquiring first shape data, which is shape data of the center portion of the first detection target surface, in a first measurement coordinate system set in the first interferometer, on the basis of the image data of the first interference fringe pattern;

a second shape data acquisition step of acquiring second shape data, which is shape data of the center portion of the second detection target surface, in a second measurement coordinate system set in the second interferometer, on the basis of the image data of the second interference fringe pattern;

a first axis data acquisition step of acquiring, on the basis of the first shape data, position data of a first umbilical point which is an umbilical point on the first detection target surface, position data of a first center of curvature which is a center of curvature of the first detection target surface at the first umbilical point, and position data of a first axis which passes through the first umbilical point and the first center of curvature, in the first measurement coordinate system;

a second axis data acquisition step of acquiring, on the basis of the second shape data, position data of a second umbilical point which is an umbilical point on the second detection target surface, position data of a second center of curvature which is a center of curvature of the second detection target surface at the second umbilical point, and position data of a second axis which passes through the second umbilical point and the second center of curvature, in the second measurement coordinate system; and

a surface deviation/tilt analysis step of acquiring the surface deviations and the surface tilts, on the basis of each position data, which is acquired in the first axis data acquisition step and the second axis data acquisition step, and a relative position relation between the first measurement coordinate system and the second measurement coordinate system specified in advance.

In the aspheric lens measurement method according to the first aspect of the invention, it is preferable that the first axis data acquisition step should include a process of setting a first-secant plane, which is a virtual plane cutting the first detection target surface, and acquiring a first-sectional curve, which is an intersection line between the first-secant plane and the first detection target surface. In addition, it is also preferable that for the first time, the process should be performed in a way that the first-secant plane is initially set at any position, and for the second time and later, the process should be performed at least two times in a way that a point, at which a curvature of the previous first-sectional curve is an extreme value, on the previous first-sectional curve is acquired as a first-pseudo umbilical point and then the subsequent first-secant plane is set at the first-pseudo umbilical point so as to be orthogonal to the previous first-secant plane, thereby setting the first-pseudo umbilical point on the first-sectional curve acquired finally as the first umbilical point.

Further, it is also preferable that the second axis data acquisition step should include a process of setting a second-secant plane, which is a virtual plane cutting the second detection target surface, and acquiring a second-sectional curve, which is an intersection line between the second-secant plane and the second detection target surface. In addition, it is also preferable that for the first time, the process should be performed in a way that the second-secant plane is initially set at any position, and for the second time and later, the process should be performed at least two times in a way that a point, at which a curvature of the previous second-sectional curve is an extreme value, is acquired as a second pseudo umbilical point and then the subsequent second-secant plane is set at the second pseudo umbilical point so as to be orthogonal to the previous second-secant plane, thereby setting the second pseudo umbilical point on the second-sectional curve acquired finally as the second umbilical point.

Furthermore, according to the first aspect of the invention, it is preferable that the asphere should be an aspheric lens.

Further, according to a second aspect of the invention, provided is an asphere measurement apparatus for measuring surface deviations and surface tilts of an asphere having a first detection target surface and a second detection target surface formed as aspheric surfaces which are rotationally symmetric. The apparatus includes the following components:

a first interferometer that irradiates first measurement light onto the center portion of the first detection target surface so as to acquire image data of a first interference fringe pattern which is formed by optical interference between first reference light and returning light of the first measurement light from the first detection target surface;

a second interferometer that irradiates second measurement light onto the center portion of the second detection target surface so as to acquire image data of a second interference fringe pattern which is formed by optical interference between second reference light and returning light of the second measurement light from the second detection target surface;

a first shape data acquisition section that acquires first shape data, which is shape data of the center portion of the first detection target surface, in a first measurement coordinate system set in the first interferometer, on the basis of the image data of the first interference fringe pattern;

a second shape data acquisition section that acquires second shape data, which is shape data of the center portion of the second detection target surface, in a second measurement coordinate system set in the second interferometer, on the basis of the image data of the second interference fringe pattern;

a first axis data acquisition section that acquires, on the basis of the first shape data, position data of a first umbilical point which is an umbilical point on the first detection target surface, position data of a first center of curvature which is a center of curvature of the first detection target surface at the first umbilical point, and position data of a first axis which passes through the first umbilical point and the first center of curvature, in the first measurement coordinate

3

system;

a second axis data acquisition section that acquires, on the basis of the second shape data, position data of a second umbilical point which is an umbilical point on the second detection target surface, position data of a second center of curvature which is a center of curvature of the second detection target surface at the second umbilical point, and position data of a second axis which passes through the second umbilical point and the second center of curvature, in the second measurement coordinate system; and

a surface deviation/tilt analysis section that acquires the surface deviations and the surface tilts, on the basis of each position data, which is acquired by the first axis data acquisition section and the second axis data acquisition section, and a relative position relation between the first measurement coordinate system and the second measurement coordinate system specified in advance.

Furthermore, the "umbilical point" is mathematically defined as a point on the curved surface (the first lens surface or the second lens surface) and a point at which the normal curvature (the curvature of the intersection line, which is a plane curve, between the curved surface and the plane including the tangent line in any direction and the normal line of the curved surface at the point) is constant with respect to the direction of all the tangent lines to the curved surface at the point.

Further, the "first center of curvature" is mathematically defined as a center of curvature of the intersection line (a plane curve) between the first lens surface and the predetermined plane, which includes the tangent line in any direction and the normal line of the first lens surface at the first umbilical point, at the first umbilical point.

Likewise, the "second center of curvature" is mathematically defined as a center of curvature of the intersection line (a plane curve) between the second lens surface and the predetermined plane, which includes the tangent line in any direction and the normal line of the second lens surface at the second umbilical point, at the second umbilical point.

The asphere measurement method and apparatus according to the aspects of the invention has the above-mentioned characteristics, and has the following advantages.

Specifically, in the asphere measurement method and apparatus according to the aspects of the invention, on the basis of the shape data (the first shape data and the second shape data) acquired by the optical interferometer capable of shape analysis of light wavelength order, respective position data of the first umbilical point, the first center of curvature, the first axis, the second umbilical point, the second center of curvature, and the second axis are acquired by an analytical method. From these position data, the surface tilts and surface deviations of the asphere are acquired. As a result, it is possible to measure surface tilts and surface deviations with high accuracy.

Further, if it is possible to obtain the shape data of the center portions of the first detection target surface and the second detection target surface, it is also possible to obtain the surface tilts and the surface deviations for them. Therefore, it is possible to perform the measurement even when the asphere as a measurement target does not have a wedge-shaped flat portion.

BRIEF DESCRIPTION OF THE DRAWINGS

Fig. 1 is a schematic configuration diagram of an asphere measurement apparatus according to an embodiment;
Fig. 2 is a schematic configuration diagram of an optical system of the asphere measurement apparatus shown in Fig. 1;
Fig. 3 is a block diagram illustrating a configuration of the control analysis section shown in Fig. 1;
Fig. 4 is a sectional view illustrating a configuration of an aspheric lens as a measurement target;
Fig. 5 is a diagram illustrating a first lens surface formed on the basis of first shape data;
Fig. 6 is a diagram illustrating a procedure (first phase) of a first axis data acquisition step;
Fig. 7 is a diagram illustrating a procedure (second phase) of the first axis data acquisition step;
Fig. 8 is a diagram illustrating a procedure (third phase) of the first axis data acquisition step;
Fig. 9 is a diagram illustrating a procedure (fourth phase) of the first axis data acquisition step;
Fig. 10 is a diagram illustrating a second lens surface formed on the basis of second shape data;
Fig. 11 is a diagram illustrating a procedure (first phase) of a second axis data acquisition step;
Fig. 12 is a diagram illustrating a procedure (second phase) of the second axis data acquisition step;
Fig. 13 is a diagram illustrating a procedure (third phase) of the second axis data acquisition step;
Fig. 14 is a diagram illustrating a procedure (fourth phase) of the second axis data acquisition step;
Fig. 15 is a diagram illustrating a relative position relation between a first measurement coordinate system and a second measurement coordinate system;
Fig. 16 is a diagram illustrating a procedure of a surface deviation/tilt analysis step;
Fig. 17 is a diagram illustrating a procedure of another first axis data acquisition step; and

Fig. 18 is a diagram illustrating a procedure of another second axis data acquisition step.

DESCRIPTION OF THE PREFERRED EMBODIMENTS

Hereinafter, an embodiment of the invention will be described with reference to the above-mentioned drawings. Furthermore, the respective drawings used to describe the embodiment are schematic explanatory diagrams, and do not illustrate a specific shape and structure. In the drawings, the sizes of the respective elements, the distances between the elements, and the like may be appropriately changed.

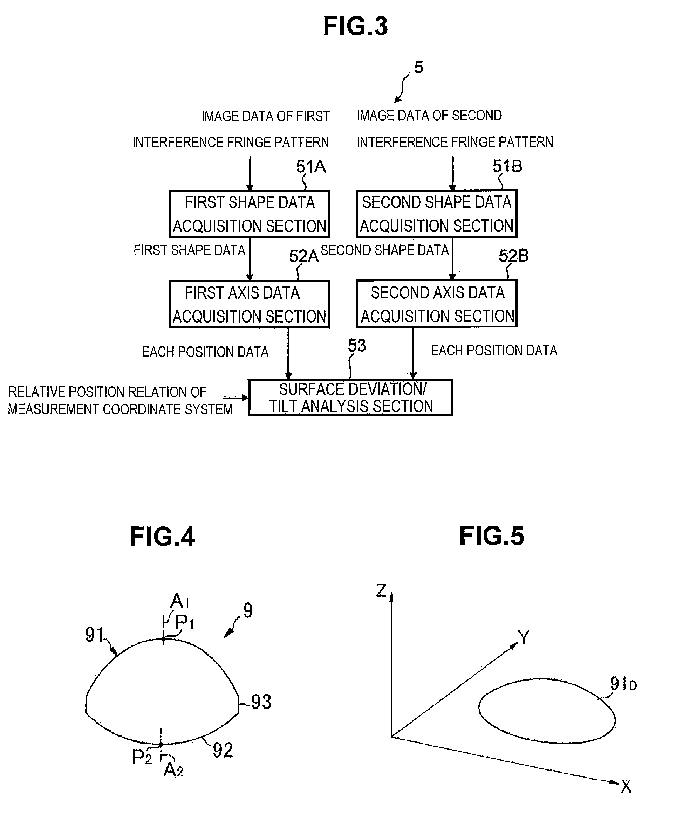

First, in the embodiment, a configuration of the aspheric lens 9, which is an asphere as a measurement target, and measurement items are described with reference to Fig. 4.

As shown in Fig. 4, the aspheric lens 9 includes, on the basis of its design: a first lens surface 91 (the first detection target surface) formed as an aspheric surface which is centered on a first rotation axis $A_1$ so as to be rotationally symmetric; a second lens surface 92 (the second detection target surface) formed as an aspheric surface which is centered on a second rotation axis $A_2$ so as to be rotationally symmetric; and a side surface 93 formed as a cylindrical surface.

Further, in the design, a first umbilical point $P_1$ is set at the center of the first lens surface 91, and a second umbilical point P2 is set at the center of the second lens surface 92. The first umbilical point $P_1$ is an intersection point between the first lens surface 91 and the first rotation axis $A_1$. The normal curvature at the first umbilical point $P_1$ is constant with respect to the direction of all the tangent lines to the first lens surface 91 at the first umbilical point $P_1$. Likewise, the second umbilical point $P_2$ is an intersection point between the second lens surface 92 and the second rotation axis $A_2$. The normal curvature at the second umbilical point $P_2$ is constant with respect to the direction of all the tangent lines to the second lens surface 92 at the second umbilical point $P_2$.

Furthermore, in the design, the above-mentioned first rotation axis $A_1$ and second rotation axis $A_2$ are configured to coincide with each other. However, sometimes manufacturing errors may cause surface deviations and surface tilts that make these axes not coincide with each other. In the drawing, for convenience of description, the amount of deviation between the first rotation axis $A_1$ and the second rotation axis $A_2$ is illustrated as if it has a large value. As it is, the amount of deviation is usually a minute amount of error of the light wavelength order.

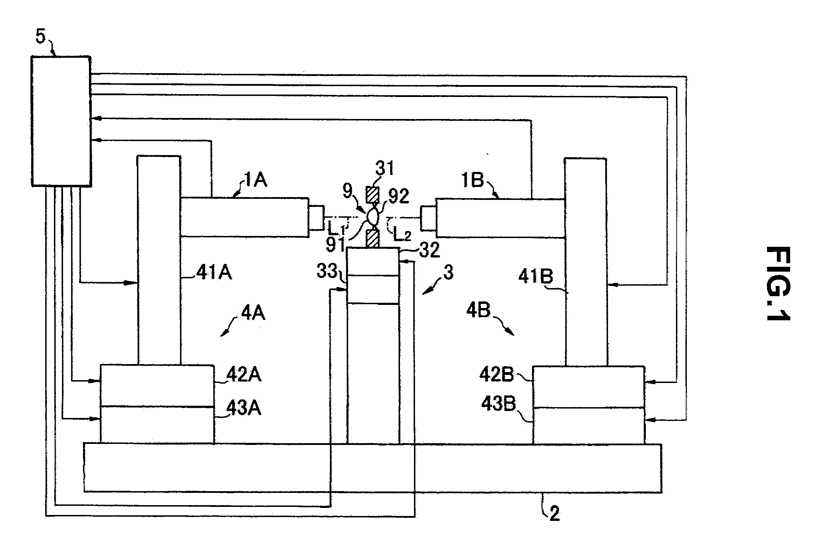

Next, the configuration of the asphere measurement apparatus according to the embodiment of the invention is described with reference to Figs. 1 to 3. The asphere measurement apparatus shown in Fig. 1 is configured to measure and analyze the surface deviations and the surface tilts of the above-mentioned aspheric lens 9. The apparatus includes: a first interferometer 1A that is disposed to be closer to the first lens surface 91 of the aspheric lens 9; a second interferometer 1B that is disposed to be closer to the second lens surface 92 thereof; a detection target alignment section 3 that is placed on the optical table 2; a first interferometer position adjustment section 4A that adjusts the position of the first interferometer 1A; a second interferometer position adjustment section 4B that adjusts the position of the second interferometer 1B; and a control analysis section 5 that analyzes the surface deviations and the surface tilts of the aspheric lens 9.

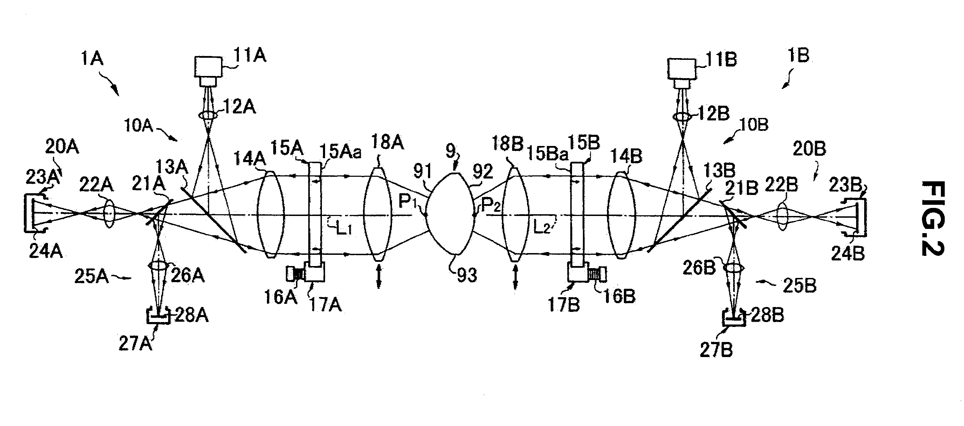

The first interferometer 1A has, as shown in Fig. 2, a first interference optical system 10A, a first interference fringe image pickup system 20A, and a first alignment image pickup system 25A. The first interference optical system 10A is the Fizeau type optical system. The system includes: a light source section 11A that outputs highly coherent beams; a beam-diameter magnifying lens 12A that magnifies a beam diameter of the beams which are output from the light source section 11A; an optical beam splitting element 13A that reflects the beams, which are emitted from the beam-diameter magnifying lens 12A, toward the right side of the drawing; a collimator lens 14A that collimates the beams emitted from the optical beam splitting element 13A; a flat reference plate 15A that reflects back a part of a plane wave, which is emitted from the collimator lens 14A, on the reference base plane 15Aa so as to form first reference light and transmits the remaining light along a measurement optical axis $L_1$; and an objective lens 18A that converts the beams, which are emitted from the flat reference plate 15A, into first measurement light, which is formed by a spherical wave, and irradiates the light onto the center portion (which is an area including above-mentioned first umbilical point $P_1$) of the first lens surface 91. The system is configured to obtain first interference light by synthesizing the reflected light from the first lens surface 91 and the first reference light.

Furthermore, the flat reference plate 15A is supported by a fringe scan adapter 17A having a piezoelectric element 16A. Thus, the plate is configured to be able to be slightly moved in the direction of the measurement optical axis $L_1$ at the time of the fringe scan measurement and the like. In addition, the objective lens 18A is configured to be able to be withdrawn from the position on the measurement optical axis $L_1$.

The first interference fringe image pickup system 20A is for taking an image at the time of measuring the aspheric lens 9 (the first lens surface 91). The system includes: an imaging lens 22A that concentrates the first interference light which is transmitted through the optical beam splitting element 13A and 21A and travels toward the left side of the drawing; and an imaging camera 23A having a two-dimensional image sensor 24A constituted by CCD, CMOS, and the like. The system is configured to acquire image data of interference fringes (the first interference fringe pattern) formed on the two-dimensional image sensor 24A by the imaging lens 22A.

The alignment image pickup system 25A is for taking an image at the time of relative alignment adjustment and the like performed between the first interferometer 1A and the second interferometer 1B. The system includes: an imaging lens 26A that concentrates the beams which are reflected toward the lower side of the drawing by the optical beam splitting element 21A; and an imaging camera 27A having a two-dimensional image sensor 28A constituted by CCD, CMOS, and the like.

The second interferometer 1B has the same configuration as the first interferometer 1A. The interferometer is configured to have a second interference optical system 10B, a second interference fringe image pickup system 20B, and a second alignment image pickup system 25B. The second interference optical system 10B is the Fizeau type optical system. The system includes: a light source section 11B that outputs highly coherent beams; a beam-diameter magnifying lens 12B that magnifies a beam diameter of the beams which are output from the light source section 11B; an optical beam splitting element 13B that reflects the beams, which are emitted from the beam-diameter magnifying lens 12B, toward the left side of the drawing; a collimator lens 14B that collimates the beams emitted from the optical beam splitting element 13B; a flat reference plate 15B that reflects back a part of a plane wave, which is emitted from the collimator lens 14B, on the reference base plane 15Ba so as to form second reference light and transmits the remaining light along a measurement optical axis $L_2$; and an objective lens 18B that converts the beams, which are emitted from the flat reference plate 15B, into second measurement light, which is formed by a spherical wave, and irradiates the light onto the center portion (which is an area including the above-mentioned second umbilical point $P_2$) of the second lens surface 92. The system is configured to obtain second interference light by synthesizing the reflected light from the second lens surface 92 and the second reference light.

Furthermore, the flat reference plate 15B is supported by a fringe scan adapter 17B having a piezoelectric element 16B. Thus, the plate is configured to be able to be slightly moved in the direction of the measurement optical axis $L_2$ at the time of the fringe scan measurement and the like. In addition, the objective lens 18B is configured to be able to be withdrawn from the position on the measurement optical axis $L_2$.

The second interference fringe image pickup system 20B is for taking an image at the time of measuring the aspheric lens 9 (the second lens surface 92). The system includes: an imaging lens 22B that concentrates the second interference light which is transmitted through the optical beam splitting element 13B and 21B and travels toward the left side of the drawing; and an imaging camera 23B having a two-dimensional image sensor 24B constituted by CCD, CMOS, and the like. The system is configured to acquire image data of interference fringes (the second interference fringe pattern) formed on the two-dimensional image sensor 24B by the imaging lens 22B.

The alignment image pickup system 25B is for taking an image at the time of relative alignment adjustment and the like performed between the first interferometer 1A and the second interferometer 1B. The system includes: an imaging lens 26B that concentrates the beams which are reflected toward the lower side of the drawing by the optical beam splitting element 21B; and an imaging camera 27B having a two-dimensional image sensor 28B constituted by CCD, CMOS, and the like.

On the other hand, as shown in Fig. 1, the detection target alignment section 3 is configured to include: a holding stage 31 (the detection target surface rotation section in the embodiment) that holds the aspheric lens 9; a lens tilt adjustment stage 32 that adjusts tilts of the measurement optical axes $L_1$ and $L_2$ (of the first lens surface 91 and the second lens surface 92) of the aspheric lens 9 held by the holding stage 31; and a lens position adjustment stage 33 that adjusts a position of the aspheric lens 9 relative to the measurement optical axes $L_1$ and $L_2$ in the direction perpendicular to the page and the horizontal direction in the drawing.

Further, as shown in Fig. 1, the first interferometer position adjustment section 4A includes: a first Z stage 41A that holds the first interferometer 1A and is able to move it in the vertical direction in the drawing; a first XY stage 42A that is able to move the first interferometer 1A in the direction perpendicular to the page and the horizontal direction in the drawing with the first Z stage 41A interposed therebetween; and a first interferometer tilt adjustment stage 43A that adjusts the tilt of the first interferometer 1A with the first XY stage 42A and the first Z stage 41A interposed therebetween.

Likewise, the second interferometer position adjustment section 4B includes: a second Z stage 41B that holds the second interferometer 1B and is able to move it in the vertical direction in the drawing; a second XY stage 42B that is able to move the second interferometer 1B in the direction perpendicular to the page and the horizontal direction in the drawing with the second Z stage 41B interposed therebetween; and a second interferometer tilt adjustment stage 43B that adjusts the tilt of the second interferometer 1B with the second XY stage 42B and the second Z stage 41B interposed therebetween.

Further, the control analysis section 5 is constituted by a computer device and the like that acquires shape data (the first shape data and the second shape data) of the center portions of the first lens surface 91 and the second lens surface 92 and controls driving of the stages of the above-mentioned detection target alignment section 3, first interferometer position adjustment section 4A, and second interferometer position adjustment section 4B. As shown in Fig. 3, the control analysis section 5 includes a first shape data acquisition section 51A, a second shape data acquisition section 51B, a first axis data acquisition section 52A, a second axis data acquisition section 52B, and a surface deviation · surface tilt analysis section 53. Those are constituted by storage sections such as a CPU and a hard disc, which are provided in the computer device, and programs which are stored in the storage sections.

The first shape data acquisition section 51A acquires the first shape data of the center portion of the first lens surface 91 in a first measurement coordinate system set in the first interferometer 1A, on the basis of the image data of the first interference fringe pattern.

The second shape data acquisition section 51B acquires the second shape data of the center portion of the second lens surface 92 in a second measurement coordinate system set in the second interferometer 1B, on the basis of the image data of the second interference fringe pattern.

The first axis data acquisition section 52A acquires, on the basis of the first shape data, the position data of the above-mentioned first umbilical point $P_1$, the position data of the first center of curvature which is the center of curvature of the first lens surface 91 at the first umbilical point $P_1$, the position data of the first axis which passes through the first umbilical point $P_1$ and the first center of curvature, in the first measurement coordinate system.

The second axis data acquisition section 52B acquires, on the basis of the second shape data, the position data of the above-mentioned second umbilical point $P_2$, the position data of the second center of curvature which is the center of curvature of the second lens surface 92 at the second umbilical point $P_2$, the position data of the second axis which passes through the second umbilical point $P_2$ and the first center of curvature, in the second measurement coordinate system.

The surface deviation/tilt analysis section 53 acquires the surface deviations and the surface tilts of the aspheric lens 9, on the basis of each position data, which is acquired by the first axis data acquisition section 52A and the second axis data acquisition section 52B, and the relative position relation between the first measurement coordinate system and the second measurement coordinate system specified in advance.

Hereinafter, an aspheric lens measurement method according to an embodiment of the invention will be described. The aspheric lens measurement method of the embodiment is performed by using the above-mentioned aspheric lens measurement apparatus.

1. First, relative alignment adjustment of the first interferometer 1A and the second interferometer 1B is performed. This alignment adjustment is for making the measurement optical axis $L_1$ of the first interferometer 1A coincide with the measurement optical axis $L_2$ of the second interferometer 1B. The alignment adjustment is performed in a way that an operator performs manual operations by using the first interferometer position adjustment section 4A and the second interferometer position adjustment section 4B. The brief procedure is as follows.

A. The objective lens 18A of the first interferometer 1A and the objective lens 18B of the second interferometer 1B are withdrawn from the positions on the measurement optical axis $L_1$ and the measurement optical axis $L_2$. Then, a plane parallel plate jig (not shown) having two optical planes (optical flats) parallel to each other is disposed between the first interferometer 1A and the second interferometer 1B (the plane parallel plate jig may be held by the holding stage 31). Furthermore, in this arrangement step, adjustment of deviation is performed so as to make the two optical planes of the plane parallel plate jig be as perpendicular as possible to the measurement optical axes $L_1$ and $L_2$.

B. The first interferometer 1A irradiates parallel beams onto the optical plane on one side of the plane parallel plate jig, and the spot image, which is formed by the light reflected from the optical plane on one side thereof, and the spot image, which is formed by the light reflected from the reference base plane 15Aa, are taken by the imaging camera 27A of the alignment image pickup system 25A. Then, by using the first interferometer tilt adjustment stage 43A, the tilt of the first interferometer 1A is adjusted so as to overlap the two spot images with each other. This tilt adjustment makes the measurement optical axis $L_1$ of the first interferometer 1A perpendicular to the optical plane on one side of the plane parallel plate jig. Furthermore, instead of such a manner, by allowing the imaging camera 23A to take the image of the interference fringe pattern formed between the light reflected by the optical plane on one side thereof and the light reflected by the reference base plane 15Aa, the tilt of the first interferometer 1A may be adjusted so as to make the interference fringe pattern be in a null pattern state.

C. Likewise, the second interferometer 1B irradiates parallel beams onto the optical plane on one side of the plane parallel plate jig, and the spot image, which is formed by the light reflected from the optical plane on one side thereof, and the spot image, which is formed by the light reflected from the reference base plane 15Ba, are taken by the imaging camera 27B of the alignment image pickup system 25B. Then, by using the second interferometer tilt adjustment stage 43B, the tilt of the second interferometer 1B is adjusted so as to overlap the two spot images with each other. This tilt adjustment makes the measurement optical axis L2 of the second interferometer 1B perpendicular to the optical plane on one side of the plane parallel plate jig, thereby making the measurement optical axes $L_1$ and $L_2$ parallel to each other. Furthermore, instead of such a manner, by allowing the imaging camera 23B to take the image of the interference fringe pattern formed between the light reflected by the optical plane on one side thereof and the light reflected by the reference base plane 15Ba, the tilt of the second interferometer 1B may be adjusted so as to make the interference fringe pattern be in a null pattern state.

D. Instead of the plane parallel plate jig, a spherical jig (not shown), which can be optically regarded as an ideal sphere, is disposed between the first interferometer 1A and the second interferometer 1B.

E. The first interferometer 1A irradiates a plane wave onto the spherical jig, and the image of the interference fringe pattern (having a concentric circular shape) between the light, which is reflected by the spherical jig, and the light, which is reflected by the reference base plane 15Aa, is taken by the imaging camera 23A of the first interference fringe image pickup system 20A. Then, by using the first Z stage 41A and the first XY stage 42A, the position of the first interferometer 1A is adjusted so as to position the measurement optical axis $L_1$ at the center of the interference fringe pattern.

F. Likewise, the second interferometer 1B irradiates a plane wave onto the spherical jig, and the image of the interference fringe pattern (having a concentric circular shape) between the light, which is reflected by the spherical jig, and the light, which is reflected by the reference base plane 15Ba, is taken by the imaging camera 23B of the second interference fringe image pickup system 20B. Then, by using the second Z stage 41B and the second XY stage 42B, the position of the second interferometer 1B is adjusted so as to position the measurement optical axis $L_2$ at the center of the interference fringe pattern. This position adjustment makes the measurement optical axes $L_1$ and $L_2$ coincide with each other.

Furthermore, even when such alignment adjustment is performed, because of mechanical accuracies of the stages, it may be difficult to make the measurement optical axis $L_1$ of the first interferometer 1A perfectly coincide with the measurement optical axis $L_2$ of the second interferometer 1B. In this case, the relative position deviation and tilt between the measurement optical axis $L_1$ and the measurement optical axis $L_2$ are acquired, and the data of those are stored.

2. Next, the objective lens 18A of the first interferometer 1A and the objective lens 18B of the second interferometer 1B are provided on the measurement optical axis $L_1$ and the measurement optical axis $L_2$, respectively, and simultaneously, the aspheric lens 9 is held by the holding stage 31. Then, alignment adjustment of the aspheric lens 9 relative to the first interferometer 1A and the second interferometer 1B is performed. This alignment adjustment is for respectively positioning the above-mentioned first umbilical point $P_1$ and the second umbilical point $P_2$ near the measurement optical axis $L_1$ of the first interferometer 1A and near the measurement optical axis $L_2$ of the second interferometer 1B. The alignment adjustment is performed in a way that an operator performs manual operations by using the lens tilt adjustment stage 32 and the lens tilt adjustment stage 33.

3. Subsequently, the first interferometer 1A irradiates the first measurement light onto the center portion of the first lens surface 91. Thereby, the imaging camera 23A acquires the image data of the first interference fringe pattern formed by the optical interference between the first reference light and the light which returns from the first lens surface 91 of the first measurement light (the first interference fringe acquisition step).

4. Likewise, the second interferometer 1B irradiates the second measurement light onto the center portion of the second lens surface 92. Thereby, the imaging camera 23B acquires the image data of the second interference fringe pattern formed by the optical interference between the second reference light and the light which returns from the second lens surface 92 of the second measurement light (the second interference fringe acquisition step).

5. Next, on the basis of the image data of the first interference fringe pattern, the first shape data (refer to Fig. 5) which is the shape data of the center portion of the first lens surface 91 is acquired in the first measurement coordinate system which is set in the first interferometer 1A (the first shape data acquisition step). This process is performed by the first shape data acquisition section 51A shown in Fig. 3. Furthermore, the first lens surface $91_D$ in Figs. 5 to 9 schematically shows the shape of the center portion of the first lens surface 91 formed and visualized on the basis of the first shape data.

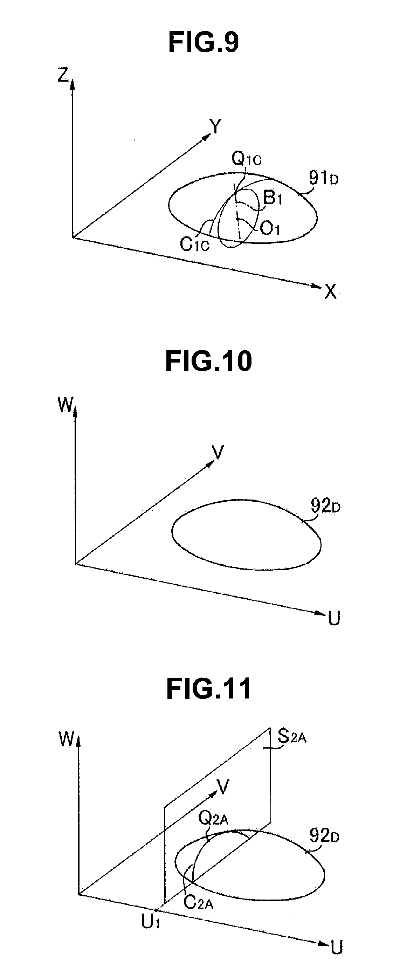

6. Likewise, on the basis of the image data of the second interference fringe pattern, the second shape data (refer to Fig. 10) which is the shape data of the center portion of the second lens surface 92 is acquired in the second measurement coordinate system which is set in the second interferometer 1B (the second shape data acquisition step). This process is performed by the second shape data acquisition section 51B shown in Fig. 3. Furthermore, the second lens surface $92_D$ in Figs. 10 to 14 schematically shows the shape of the center portion of the second lens surface 92 formed and visualized on the basis of the second shape data.

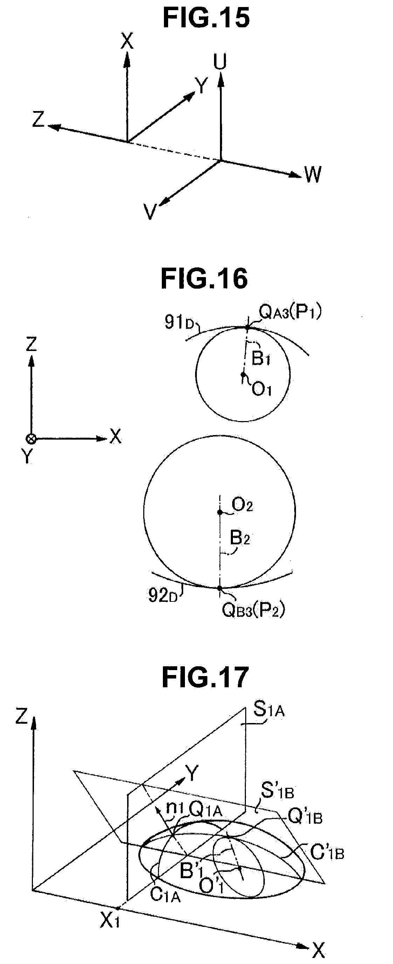

Here, the above-mentioned first measurement coordinate system and second measurement coordinate system are described. The first measurement coordinate system is, as shown in Figs. 5 to 9, a 3-dimensional rectangular coordinate system of the X, Y, and Z axes orthogonal to each other, and is set so that the Z axis is parallel to the measurement optical axis $L_1$ of the first interferometer 1A. On the other hand, the second measurement coordinate system is, as shown in Figs. 10 to 14, a 3-dimensional rectangular coordinate system of the U, V, and W axes orthogonal to each other, and is set so that the W axis is parallel to the measurement optical axis $L_2$ of the second interferometer 1B. Further, as shown in Fig. 15, when the alignment adjustment is performed so as to make the

measurement optical axis $L_1$ and the measurement optical axis $L_2$ perfectly coincide with each other, the relative positional relation between the first measurement coordinate system and the second measurement coordinate system is set as follows: the X and U axes and the Y and V axes are respectively parallel (the directions of the X and U axes are equal to each other, and the directions of the Y and V axes are opposite to each other) to each other so that the Z and W axes are positioned to be collinear (the directions of those are opposite to each other). Furthermore, when the measurement optical axis $L_1$ and the measurement optical axis $L_2$ do not coincide with each other and the relative position deviation and tilt occur therebetween, this causes the differences in the relative positional relation between the first measurement coordinate system and the second measurement coordinate system. Specifically, when there are the difference of the relative position and the difference of the tilt between the measurement optical axis $L_1$ and the measurement optical axis $L_2$, such differences are acquired in step 1. In addition, on the basis of the differences, the relative position relation between the first measurement coordinate system and the second measurement coordinate system is specified and stored.

7. Then, on the basis of the first shape data, the position data of the first umbilical point $P_1$ of the first lens surface 91, the position data of the first center of curvature at the first umbilical point $P_1$, and the position data of the first axis passing through the first umbilical point $P_1$ and first center of curvature are acquired in the first measurement coordinate system (the first axis data acquisition step). This process is performed by the first axis data acquisition section 52A shown in Fig. 3 in the following order.

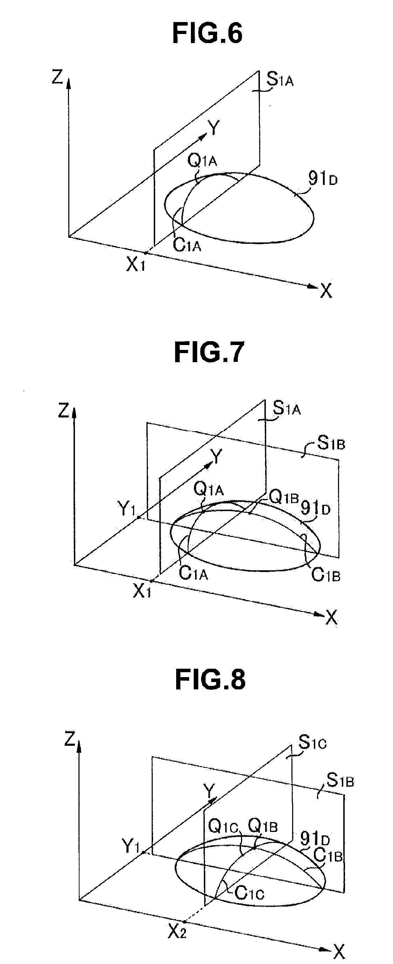

A. First, as shown in Fig. 6, the first first-secant plane $S_{1A}$ for cutting the first lens surface $91_D$ is set in the data. In the embodiment, the first first-secant plane $S_{1A}$ is set at the position of $X=X_1$ in perpendicular to the X axis.

B. Next, the intersection line between the first first-secant plane $S_{1A}$ and the first lens surface $91_D$ are acquired and defined as the first first-sectional curve $C_{1A}$ (refer to Fig. 6). In the embodiment, the intersection line between the first first-secant plane $S_{1A}$ and the first lens surface $91_D$ is subjected to the curve fitting based on a high-order polynomial, thereby acquiring the first first-sectional curve $C_{1A}$. Furthermore, the first lens surface $91_D$ is represented by the following expression (A1), and the first first-sectional curve $C_{1A}$ is represented by the following expression (A2).

Numerical Expression 1

$$Z_1 = f_1(X, Y) \quad \ldots \quad (A1)$$

$$Z_1|_{X=X1} = f_1(X_1, Y) \quad \ldots \quad (A2)$$

C. Thereafter, the point, at which the curvature of the first first-sectional curve $C_{1A}$ is an extreme value, (the point at which the differential value of the curvature is equal to 0) is acquired as the first first-pseudo umbilical point $Q_{1A}$. Furthermore, the curvature of the first first-sectional curve $C_{1A}$ is represented by the following expression (A3).

Numerical Expression 2

$$K_1|_{X=X1} = f_1{}'(X_1, Y) / (1 + f_1{}'(X_1, Y)^2)^{3/2} \quad \ldots \quad (A3)$$

D. Subsequently, as shown in Fig. 7, the second first-secant plane $S_{1B}$ for cutting the first lens surface $91_D$ is set to be perpendicular to the first first-secant plane $S_{1A}$. In the embodiment, the second first-secant plane $S_{1B}$ is set to include the coordinates $(X_1, Y_1)$ of the first first-pseudo umbilical point $Q_{1A}$ and be perpendicular to the Y axis.

E. Then, the intersection line between the second first-secant plane $S_{1B}$ and the first lens surface $91_D$ are acquired as the second first-sectional curve $C_{1B}$ (refer to Fig. 7). In the embodiment, the intersection line between the second first-secant plane $S_{1B}$ and the first lens surface $91_D$ is subjected to the curve fitting based on a high-order polynomial, thereby acquiring the second first-sectional curve $C_{1B}$. Furthermore, the second first-sectional curve $C_{1B}$ is represented by the following expression (A4).

Numerical Expression 3

$$Z_1|_{Y=Y1} = f_1(X, Y_1) \qquad \dots \quad (A4)$$

F. Next, the point, at which the curvature of the second first-sectional curve $C_{1B}$ is an extreme value, is acquired as the second first-pseudo umbilical point $Q_{1B}$ (of which coordinates are set as $(X_2, Y_1)$). Furthermore, the curvature of the second first-sectional curve $C_{1B}$ is represented by the following expression (A5).

Numerical Expression 4

$$K_1|_{Y=Y1} = f_1'(X, Y_1) / (1 + f_1'(X, Y_1)^2)^{3/2} \qquad \dots \quad (A5)$$

G. Subsequently, as shown in Fig. 8, the third first-secant plane $S_{1C}$ for cutting the first lens surface $91_D$ is set to be perpendicular to the second first-secant plane $S_{1B}$. In the embodiment, the third first-secant plane $S_{1C}$ is set to include the coordinates $(X_2, Y_1)$ of the second first-pseudo umbilical point $Q_{1B}$ and be perpendicular to the X axis.

H. Then, the intersection line between the third first-secant plane $S_{1C}$ and the first lens surface $91_D$ are acquired as the third (final) first-sectional curve $C_{1C}$ (refer to Fig. 8). In the embodiment, the intersection line between the third first-secant plane $S_{1C}$ and the first lens surface $91_D$ is subjected to the curve fitting based on a high-order polynomial, thereby acquiring the third first-sectional curve $C_{1C}$. Furthermore, the third first-sectional curve $C_{1C}$ is represented by the following expression (A6).

Numerical Expression 5

$$Z_1|_{X=X2} = f_1(X_2, Y) \qquad \dots \quad (A6)$$

I. Next, the point, at which the curvature of the third first-sectional curve $C_{1C}$ is an extreme value, is acquired as the third (final) first-pseudo umbilical point $Q_{1C}$ (of which coordinates are set as $(X_2, Y_2)$). Then, this is regarded as the first umbilical point $P_1$, thereby acquiring the position data thereof. Furthermore, the curvature of the third first-sectional curve $C_{1C}$ is represented by the following expression (A7).

Numerical Expression 6

$$K_1|_{X=X2} = f_1'(X_2, Y) / (1 + f_1'(X_2, Y)^2)^{3/2} \qquad \dots \quad (A7)$$

J. Then, as shown in Fig. 9, the center of curvature $O_1$ at the third first-pseudo umbilical point $Q_{1C}$ is acquired as the above-mentioned first center of curvature (hereinafter referred to as the "first center of curvature $O_1$") of the first lens surface 91 at the first umbilical point $P_1$, and simultaneously the straight line passing through the third first-pseudo umbilical point $Q_{1C}$ and the first center of curvature $O_1$ is acquired as the first axis $B_1$ (which corresponds to the above-mentioned first rotation axis $A_1$), thereby acquiring position data of those. Furthermore, the radius of curvature at the third first-pseudo umbilical point $Q_{1C}$ is represented by the following expression (A8).

Numerical Expression 7

$$R_1|_{X=X2} = (1 + (f_1'(X_2, Y)^2)^{3/2}) / f_1'(X_2, Y) \qquad \dots \quad (A8)$$

8. Then, on the basis of the second shape data, the position data of the second umbilical point $P_2$ of the second lens surface 92, the position data of the second center of curvature at the second umbilical point $P_2$, and the position

data of the second axis passing through the second umbilical point $P_2$ and second center of curvature are acquired in the second measurement coordinate system (the second axis data acquisition step). This process is performed by the second axis data acquisition section 52B shown in Fig. 3 in the following order.

A. First, as shown in Fig. 11, the first second-secant plane $S_{2A}$ for cutting the second lens surface $92_D$ is set in the data. In the embodiment, the first second-secant plane $S_{2A}$ is set at the position of $U=U_1$ in perpendicular to the U axis.

B. Next, the intersection line between the first second-secant plane $S_{2A}$ and the second lens surface $92_D$ are acquired and defined as the first second-sectional curve $C_{2A}$ (refer to Fig. 11). In the embodiment, the intersection line between the first second-secant plane $S_{2A}$ and the second lens surface $92_D$ is subjected to the curve fitting based on a high-order polynomial, thereby acquiring the first second-sectional curve $C_{2A}$. Furthermore, the second lens surface $92_D$ is represented by the following expression (B1), and the first second-sectional curve $C_{2A}$ is represented by the following expression (B2).

Numerical Expression 8

$$Z_2 = f_2(U,V) \quad \dots \quad (B1)$$

$$Z_2|_{U=U1} = f_2(U_1,V) \quad \dots \quad (B2)$$

C. Thereafter, the point, at which the curvature of the first second-sectional curve $C_{2A}$ is an extreme value, (the point at which the differential value of the curvature is equal to 0) is acquired as the first second-pseudo umbilical point $Q_{2A}$. Furthermore, the curvature of the first second-sectional curve $C_{2A}$ is represented by the following expression (B3).

Numerical Expression 9

$$K_2|_{U=U1} = f_2'(U_1,V)/(1+f_2'(U_1,V)^2)^{3/2} \quad \dots \quad (B3)$$

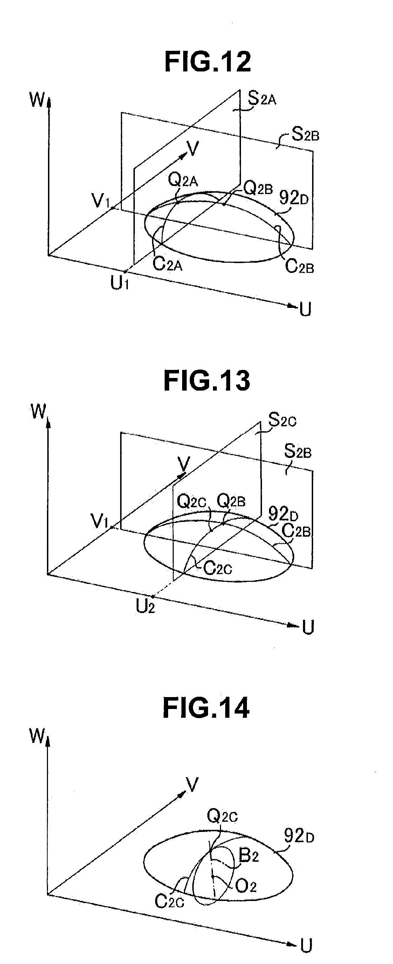

D. Subsequently, as shown in Fig. 12, the second second-secant plane $S_{2B}$ for cutting the second lens surface $92_D$ is set to be perpendicular to the first second-secant plane $S_{2A}$. In the embodiment, the second second-secant plane $S_{2B}$ is set to include the coordinates $(U_1, V_1)$ of the first second-pseudo umbilical point $Q_{2A}$ and be perpendicular to the V axis.

E. Then, the intersection line between the second second-secant plane $S_{2B}$ and the second lens surface $92_D$ are acquired as the second second-sectional curve $C_{2B}$ (refer to Fig. 12). In the embodiment, the intersection line between the second second-secant plane $S_{2B}$ and the second lens surface $92_D$ is subjected to the curve fitting based on a high-order polynomial, thereby acquiring the second second-sectional curve $C_{2B}$. Furthermore, the second second-sectional curve $C_{2B}$ is represented by the following expression (B4).

Numerical Expression 10

$$Z_2|_{V=V1} = f_2(U,V_1) \quad \dots \quad (B4)$$

F. Next, the point, at which the curvature of the second second-sectional curve $C_{2B}$ is an extreme value, is acquired as the second second-pseudo umbilical point $Q_{2B}$ (of which coordinates are set as $(U_2, V_1)$). Furthermore, the curvature of the second second-sectional curve $C_{2B}$ is represented by the following expression (B5).

Numerical Expression 11

$$K_2|_{V=V1} = f_2'(U,V_1)/(1+f_2'(U,V_1)^2)^{3/2} \quad \dots \quad (B5)$$

G. Subsequently, as shown in Fig. 13, the third second-secant plane $S_{2C}$ for cutting the second lens surface $92_D$ is set to be perpendicular to the second second-secant plane $S_{2B}$. In the embodiment, the third second-secant plane $S_{2C}$ is set to include the coordinates $(U_2, V_1)$ of the second second-pseudo umbilical point $Q_{2B}$ and be perpendicular to the U axis.

H. Then, the intersection line between the third second-secant plane $S_{2C}$ and the second lens surface $92_D$ are acquired as the third (final) second-sectional curve $C_{2C}$ (refer to Fig. 13). In the embodiment, the intersection line between the third second-secant plane $S_{2C}$ and the second lens surface $92_D$ is subjected to the curve fitting based on a high-order polynomial, thereby acquiring the third second-sectional curve $C_{2C}$. Furthermore, the third second-sectional curve $C_{2C}$ is represented by the following expression (B6).

Numerical Expression 12

$$Z_2|_{U=U2}=f_2(U_2,V) \qquad ... \quad (B6)$$

I. Next, the point, at which the curvature of the third second-sectional curve $C_{2C}$ is an extreme value, is acquired as the third (final) second-pseudo umbilical point $Q_{2C}$ (of which coordinates are set as $(U_2, V_2)$). Then, this is regarded as the second umbilical point $P_2$, thereby acquiring the position data thereof. Furthermore, the curvature of the third second-sectional curve $C_{2C}$ is represented by the following expression (B7).

Numerical Expression 13

$$K_2|_{U=U2}=f_2{}'(U_2,V)/(1+f_2{}'(U_2,V)^2)^{3/2} \qquad ... \quad (B7)$$

J. Then, as shown in Fig. 14, the center of curvature $O_2$ at the third second-pseudo umbilical point $Q_{2C}$ is acquired as the above-mentioned second center of curvature (hereinafter referred to as the "second center of curvature $O_2$") of the second lens surface 92 at the second umbilical point $P_2$, and simultaneously the straight line passing through the third second-pseudo umbilical point $Q_{2C}$ and the second center of curvature $O_2$ is acquired as the second axis $B_2$ (which corresponds to the above-mentioned second rotation axis $A_2$), thereby acquiring position data of those. Furthermore, the radius of curvature at the third second-pseudo umbilical point $Q_{2C}$ is represented by the following expression (B8).

[Numerical Expression 14]

$$R_2|_{U=U2}=(1+(f_2{}'(U_2,V)^2)^{3/2})/f_2{}'(U_2,V) \qquad ... \quad (B8)$$

9. Next, the surface deviations and the surface tilts of the aspheric lens 9 are acquired on the basis of the respective position data of the third first-pseudo umbilical point $Q_{1C}$ (the first umbilical point $P_1$), the first center of curvature $O_1$, and the first axis $B_1$ which are acquired in the step 7, the respective position data of the third second-pseudo umbilical point $Q_{2C}$ (the second umbilical point $P_2$), the second center of curvature $O_2$, and the second axis $B_2$ which are acquired in the step 8, and the relative position relation between the first measurement coordinate system and the second measurement coordinate system which are specified in advance in the step 6 (the surface deviation/tilt analysis step). This process is performed by the surface deviation/tilt analysis section 53 shown in Fig. 3 in the following order.

A. First, on the basis of the relative position relation between the first measurement coordinate system and the second measurement coordinate system, the respective position data of the third second-pseudo umbilical point $Q_{2C}$ (the second umbilical point $P_2$), the second center of curvature $O_2$, and the second axis $B_2$ which are acquired in the second measurement coordinate system are converted into the respective position data in a common coordinate system (for example, the first measurement coordinate system) (refer to Fig. 16). Furthermore, for simplification, Fig. 16 two-dimensionally shows the relative relations of the positions.

B. Next, the position deviation between the first center of curvature $O_1$ and the second center of curvature $O_2$ in the direction perpendicular to the Z axis is calculated as the surface deviation of the aspheric lens 9 (the direction of the position deviation is referred to as a surface deviation direction, and the amount of the position deviation is referred to as a surface deviation amount).

C. Further, the relative tilt between the first axis $B_1$ and the second axis $B_2$ is calculated as the surface tilt of the aspheric lens 9 (the direction of tilt of the first axis $B_1$ with respect to the second axis $B_2$ is referred to as a surface tilt direction, and the tilt angle is referred to as a surface tilt amount).

The embodiments of the invention have been hitherto described, but the invention is not limited to the above-mentioned embodiments, and may be modified into various forms.

For example, in the above-mentioned embodiment, by virtually setting the first-secant planes ($S_{1A}$ to $S_{1C}$) for cutting the first lens surface $91_D$ in the data, the process of acquiring the intersection line between the first-secant plane ($S_{1A}$ to $S_{1C}$) and the first lens surface $91_D$ as the first-sectional curve ($C_{1A}$ to $C_{1C}$) is performed three times. In addition, by virtually setting the second-secant planes ($S_{2A}$ to $S_{2C}$) for cutting the second lens surface $92_D$ in the data, the process of acquiring the intersection line between the second-secant plane ($S_{2A}$ to $S_{2C}$) and the second lens surface $92_D$ as the second-sectional curve ($C_{2A}$ to $C_{2C}$) is performed three times. However, the processes may be performed four or more times.

Further, the above-mentioned order of the first axis data acquisition step can be changed as shown in Fig. 17. Specifically, in the above-mentioned embodiment, the second first-secant plane $S_{1B}$ is set to be perpendicular to the Y axis. However, as shown in Fig. 17, the second first-secant plane $S'_{1B}$ may be set to include the normal line vector $n_1$ of the first first-sectional curve $C_{1A}$ at the first first-pseudo umbilical point $Q_{1A}$. In this case, by setting the intersection line between the second first-secant plane $S'_{1B}$ and the first lens surface $91_D$ as the second first-sectional curve $C'_{1B}$, the point at which the curvature of the second first-sectional curve $C'_{1B}$ is an extreme value is acquired as the second first-pseudo umbilical point $Q'_{1B}$. Simultaneously, the center of curvature at the second first-pseudo umbilical point $Q'_{1B}$ is acquired as the first center of curvature $O'_1$. Further, the straight line passing through the second first-pseudo umbilical point $Q'_{1B}$ and the first center of curvature $O'_1$ may be acquired as the first axis $B'_1$.

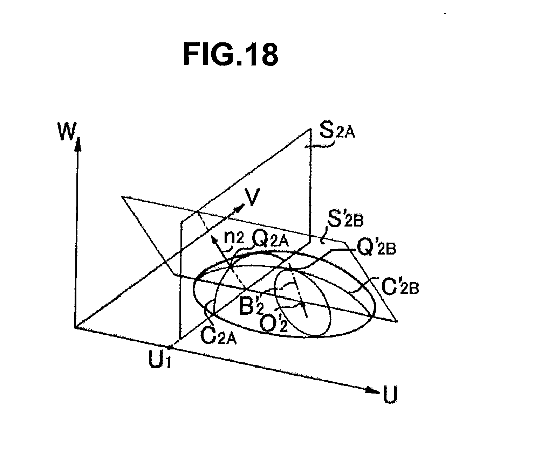

The above-mentioned order of the second axis data acquisition step can be changed as shown in Fig. 18. Specifically, in the above-mentioned embodiment, the second second-secant plane $S_{2B}$ is set to be perpendicular to the V axis. However, as shown in Fig. 18, the second second-secant plane $S'_{2B}$ may be set to include the normal line vector $n_2$ of the first second-sectional curve $C_{2A}$ at the first second-pseudo umbilical point $Q_{2A}$. In this case, by setting the intersection line between the second second-secant plane $S'_{2B}$ and the second lens surface $92_D$ as the second second-sectional curve $C'_{2B}$, the point at which the curvature of the second second-sectional curve $C'_{2B}$ is an extreme value is acquired as the second second-pseudo umbilical point $Q'_{2B}$. Simultaneously, the center of curvature at the second second-pseudo umbilical point $Q'_{2B}$ is acquired as the second center of curvature $O'_2$. Further, the straight line passing through the second second-pseudo umbilical point $Q'_{2B}$ and the second center of curvature $O'_2$ may be acquired as the second axis $B'_2$.

Further, in the above-mentioned embodiment, as shown in Fig. 2, the first measurement light, which is irradiated from the first interferometer 1A onto the first lens surface 91, and the second measurement light, which is irradiated from the second interferometer 1B onto the second lens surface 92, are generated as spherical waves. However, by removing the objective lenses 18A and 18B, the parallel beams (plane wave) may be used as the first measurement light and the second measurement light.

Further, the micro-interferometer having the Mireau-type or Michelson-type objective optical system may be used as the first interferometer and second interferometer. This configuration is validated when the aspheric lens to be measured is small.

Further, in the above-mentioned embodiment, the aspheric lens 9 to be measured does not have the wedge-shaped flat portion. However, the invention may be applicable to the measurement of the surface deviations and the surface tilts of the aspheric lens having the wedge-shaped flat portion.

Further, in the above-mentioned embodiment, the asphere to be measured is set as the aspheric lens. However, in the invention, the aspheric mirror having two mirror surfaces formed as aspheric surfaces which are rotationally symmetric may be set to be measured. In this case, it is expected that the reflectances of the mirror surfaces increase. In accordance therewith, it is preferable to adjust the reflectances and the transmittances of the reference base planes 15Aa and 15Ba. For example, in the case where the reflectances of the mirror surfaces are 100%, the reflectances of the reference base planes 15Aa and 15Ba are set to be about 50% (transmittances of 50%).

Furthermore, in the embodiment of the invention, two interferometers are used to perform the measurement. However, by adopting the technical scope of the invention, a measurement method, which uses instead of the interferometer a different measurement apparatus (such as a shape measurement apparatus using a contact type or noncontact type probe or a Moire pattern shape measurement apparatus), and the measurement apparatus may be also easily embodied.

**Claims**

1. An asphere measurement method of measuring surface deviations and surface tilts of an asphere having a first detection target surface and a second detection target surface formed as aspheric surfaces which are rotationally symmetric, the method comprising, in order of measurement:

   a first interference fringe acquisition step of irradiating first measurement light onto the center portion of the first detection target surface by using a first interferometer and acquiring image data of a first interference fringe pattern which is formed by optical interference between first reference light and returning light of the first measurement light from the first detection target surface;

   a second interference fringe acquisition step of irradiating second measurement light onto the center portion of the second detection target surface by using a second interferometer and acquiring image data of a second interference fringe pattern which is formed by optical interference between second reference light and returning light of the second measurement light from the second detection target surface;

   a first shape data acquisition step of acquiring first shape data, which is shape data of the center portion of the first detection target surface, in a first measurement coordinate system set in the first interferometer, on the basis of the image data of the first interference fringe pattern;

   a second shape data acquisition step of acquiring second shape data, which is shape data of the center portion of the second detection target surface, in a second measurement coordinate system set in the second interferometer, on the basis of the image data of the second interference fringe pattern;

   a first axis data acquisition step of acquiring, on the basis of the first shape data, position data of a first umbilical point which is an umbilical point on the first detection target surface, position data of a first center of curvature which is a center of curvature of the first detection target surface at the first umbilical point, and position data of a first axis which passes through the first umbilical point and the first center of curvature, in the first measurement coordinate system;

   a second axis data acquisition step of acquiring, on the basis of the second shape data, position data of a second umbilical point which is an umbilical point on the second detection target surface, position data of a second center of curvature which is a center of curvature of the second detection target surface at the second umbilical point, and position data of a second axis which passes through the second umbilical point and the second center of curvature, in the second measurement coordinate system; and

   a surface deviation/tilt analysis step of acquiring the surface deviations and the surface tilts, on the basis of each position data, which is acquired in the first axis data acquisition step and the second axis data acquisition step, and a relative position relation between the first measurement coordinate system and the second measurement coordinate system specified in advance.

2. The asphere measurement method according to claim 1,
   wherein the first axis data acquisition step includes a process of setting a first-secant plane, which is a virtual plane cutting the first detection target surface, and acquiring a first-sectional curve, which is an intersection line between the first-secant plane and the first detection target surface, and
   wherein for the first time, the process is performed in a way that the first-secant plane is initially set at any position, and for the second time and later, the process is performed at least two times in a way that a point, at which a curvature of the previous first-sectional curve is an extreme value, on the previous first-sectional curve is acquired as a first-pseudo umbilical point and then the subsequent first-secant plane is set at the first-pseudo umbilical point so as to be orthogonal to the previous first-secant plane, thereby setting the first-pseudo umbilical point on the first-sectional curve acquired finally as the first umbilical point.

3. The asphere measurement method according to claim 2,
   wherein the second axis data acquisition step includes a process of setting a second-secant plane, which is a virtual plane cutting the second detection target surface, and acquiring a second-sectional curve, which is an intersection line between the second-secant plane and the second detection target surface, and
   wherein for the first time, the process is performed in a way that the second-secant plane is initially set at any position, and for the second time and later, the process is performed at least two times in a way that a point, at which a curvature of the previous second-sectional curve is an extreme value, is acquired as a second pseudo umbilical point and then the subsequent second-secant plane is set at the second pseudo umbilical point so as to be orthogonal to the previous second-secant plane, thereby setting the second pseudo umbilical point on the second-sectional curve acquired finally as the second umbilical point.

4. The asphere measurement method according to any one of claims 1 to 3, wherein the asphere is an aspheric lens.

**5.** An asphere measurement apparatus for measuring surface deviations and surface tilts of an asphere having a first detection target surface and a second detection target surface formed as aspheric surfaces which are rotationally symmetric, the apparatus comprising:

a first interferometer that irradiates first measurement light onto the center portion of the first detection target surface so as to acquire image data of a first interference fringe pattern which is formed by optical interference between first reference light and returning light of the first measurement light from the first detection target surface;

a second interferometer that irradiates second measurement light onto the center portion of the second detection target surface so as to acquire image data of a second interference fringe pattern which is formed by optical interference between second reference light and returning light of the second measurement light from the second detection target surface;

a first shape data acquisition section that acquires first shape data, which is shape data of the center portion of the first detection target surface, in a first measurement coordinate system set in the first interferometer, on the basis of the image data of the first interference fringe pattern;

a second shape data acquisition section that acquires second shape data, which is shape data of the center portion of the second detection target surface, in a second measurement coordinate system set in the second interferometer, on the basis of the image data of the second interference fringe pattern;

a first axis data acquisition section that acquires, on the basis of the first shape data, position data of a first umbilical point which is an umbilical point on the first detection target surface, position data of a first center of curvature which is a center of curvature of the first detection target surface at the first umbilical point, and position data of a first axis which passes through the first umbilical point and the first center of curvature, in the first measurement coordinate system;

a second axis data acquisition section that acquires, on the basis of the second shape data, position data of a second umbilical point which is an umbilical point on the second detection target surface, position data of a second center of curvature which is a center of curvature of the second detection target surface at the second umbilical point, and position data of a second axis which passes through the second umbilical point and the second center of curvature, in the second measurement coordinate system; and

a surface deviation/tilt analysis section that acquires the surface deviations and the surface tilts, on the basis of each position data, which is acquired by the first axis data acquisition section and the second axis data acquisition section, and a relative position relation between the first measurement coordinate system and the second measurement coordinate system specified in advance.

# FIG.1

# FIG.2

# FIG.3

IMAGE DATA OF FIRST INTERFERENCE FRINGE PATTERN

IMAGE DATA OF SECOND INTERFERENCE FRINGE PATTERN

5

51A
FIRST SHAPE DATA ACQUISITION SECTION

51B
SECOND SHAPE DATA ACQUISITION SECTION

FIRST SHAPE DATA

52A SECOND SHAPE DATA

52B

FIRST AXIS DATA ACQUISITION SECTION

SECOND AXIS DATA ACQUISITION SECTION

EACH POSITION DATA

53

EACH POSITION DATA

RELATIVE POSITION RELATION OF MEASUREMENT COORDINATE SYSTEM

SURFACE DEVIATION/ TILT ANALYSIS SECTION

# FIG.4

# FIG.5

# FIG.6

# FIG.7

# FIG.8

EP 2 261 629 A2

# FIG.9

# FIG.10

# FIG.11

20

# FIG.12

# FIG.13

# FIG.14

# FIG.15

# FIG.16

# FIG.17

# FIG.18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3127003 B